# EUROPEAN PATENT APPLICATION

(11) **EP 4 329 107 A1**
(43) Date of publication of application: **28.02.2024**
(21) Application number: 22810333.9
(22) Date of filing: 06.05.2022
(51) Int. Cl.: H01R 13/52

(54) **CONNECTOR AND ELECTRONIC DEVICE**

(30) Priority: 25.05.2021 CN 202110572226; 24.08.2021 CN 202110976250
(71) Applicant: Huawei Technologies Co., Ltd., Shenzhen, Guangdong 518129 (CN)
(72) Inventor: DENG, Jianhua, Shenzhen, Guangdong 518129 (CN); HU, Gang, Shenzhen, Guangdong 518129 (CN); HU, Suining, Shenzhen, Guangdong 518129 (CN); SUN, Jian, Shenzhen, Guangdong 518129 (CN); LUO, Yufeng, Shenzhen, Guangdong 518129 (CN); WANG, Haiyang, Shenzhen, Guangdong 518129 (CN)
(74) Representative: Thun, Clemens
(86) International application number: PCT/CN2022/091277
(87) International publication number: WO 2022/247605

(57) **Abstract**

A connector includes a body (101), a connection terminal (102), a fastening portion (103), a limiting portion (104), and a connecting portion (105). The connection terminal (102) is embedded into the body (101), the connector has a contact region (1a), and a portion that is of the connection terminal (102) and that is located in the contact region (1a) is exposed from a surface of the body (101), so that the connection terminal (102) can be electrically connected to another connector. The fastening portion (103) is disposed around the body (101) and encloses the connection terminal (102). The limiting portion (104) is disposed around the body (101) and encloses the connection terminal (102). The connecting portion (105) is disposed between the fastening portion (103) and the limiting portion (104), the connecting portion (105) is disposed around the body (101), the connecting portion (105) is provided with a first waterproof structure (106), and a portion of the first waterproof structure (106) towers over a surface of the connecting portion (105). When the connector is used in an electronic device, a waterproof and dust-proof design is implemented between the connector and a housing over abutment between the first waterproof structure and the housing. In addition, the connector is not provided with a shell, and a size of the connector is relatively small. This facilitates a miniaturized design of the electronic device. An electronic device is further included.

## Description

### CROSS-REFERENCE TO RELATED APPLICATIONS

This application claims priorities to Chinese Patent Application No. 202110572226.9, filed with the China National Intellectual Property Administration on May 25, 2021 and entitled "ELECTRONIC DEVICE", and to Chinese Patent Application No. 202110976250.9, filed with the China National Intellectual Property Administration on August 24, 2021 and entitled "CONNECTOR AND ELECTRONIC DEVICE", both of which are incorporated herein by reference in their entireties.

### TECHNICAL FIELD

This application relates to the field of electronic device technologies, and in particular, to a connector and an electronic device.

### BACKGROUND

With rapid development of electronic devices, users impose increasingly high requirements on use experience of the electronic devices. For example, for portability and ease of use, the electronic devices are required to be thinner, more lightweight, and more compact.

Currently, the electronic devices mostly use a Type-C port as a connector port for charging and data transmission of the electronic devices. When a Type-C port is disposed on an electronic device, holes usually need to be provided on a housing of the electronic device. To avoid damage to a connector located inside the Type-C port and damage to devices inside the electronic device, a waterproof and dust-proof design at a joint between the connector and the electronic device becomes highly important. However, when being disposed, a conventional standard Type-C port is limited by a stacking space of the entire electronic device, and a size of the conventional standard Type-C port is relatively large. As the size of the conventional Type-C port cannot be reduced, and a waterproof and dust-proof requirement further needs to be met, it is increasingly difficult to implement a miniaturized design for an overall size of the electronic device.

Based on this, how to meet a waterproof and dust-proof requirement on a Type-C port while implementing a miniaturized design for an overall size of an electronic device has become an urgent problem to be resolved by a person skilled in the art.

### SUMMARY

This application provides a connector and an electronic device, to implement a miniaturized design of an electronic device while meeting a waterproof and dust-proof requirement on the electronic device.

According to a first aspect of this application, a connector is provided, and the connector may be used for charging or data transmission of an electronic device. In specific disposition, the connector of this application may include a body, a connection terminal, a fastening portion, a limiting portion, and a connecting portion. The connection terminal is embedded into the body, so that the body limits and fastens the connection terminal. The connector has a contact region, and a portion that is of the connection terminal and that is located in the contact region is exposed from a surface of the body, so that the connection terminal reaches contact with another connector. The fastening portion is disposed around the body and encloses the connection terminal to protect the connection terminal. The limiting portion is disposed on a side that is of the fastening portion and that is away from the contact region, the limiting portion is also disposed around the body, and the limiting portion encloses the connection terminal to protect the connection terminal. The connecting portion is disposed between the fastening portion and the limiting portion, and the connecting portion is also disposed around the body. In addition, the connecting portion is provided with a first waterproof structure, and a portion of the first waterproof structure towers over a surface of the connecting portion.

When the connector provided in this application is used in an electronic device, the first waterproof structure may abut against a housing of the electronic device, so that the first waterproof structure is elastically deformed under extrusion action of the housing, thereby achieving a relatively good waterproof and sealing effect between the connector and the housing of the electronic device. In addition, the first waterproof structure of the connector provided in this application is disposed in the body of the connector. The connector can be mounted to the housing of the electronic device, without being provided with a shell or another structure. In this way, the connector can be enabled to occupy a relatively small space in the electronic device, thereby facilitating a lightening and thinning miniaturized design of the electronic device.

In a possible implementation of this application, the connecting portion may be further provided with a first groove, and the first groove may be an annular groove disposed around the body. The first waterproof structure may be disposed in the first groove to limit the first waterproof structure.

In another possible implementation of this application, the first waterproof structure may be alternatively disposed between the fastening portion and the connecting portion, where a portion of the first waterproof structure is located on a surface of the connecting portion, and another portion of the first waterproof structure is located on a surface of the fastening portion.

In specific disposition of the first waterproof structure, a specific disposition manner of the first waterproof structure is not limited in this application. For example, the first waterproof structure may be formed in the first groove by adhesive dispensing. In this way, reliability of a connection between the first waterproof structure and the connecting portion can be improved. In another implementation, the first waterproof structure may be alternatively a waterproof ring independently disposed, and the waterproof ring may be disposed in the connecting portion and accommodated in the first groove. In addition, as the waterproof ring can be elastically deformed to some extent, the waterproof ring can be reliably connected to the connecting portion under action of an elastic force.

To improve waterproof performance of the connector, in a possible implementation of this application, an end that is of the limiting portion and that is away from the fastening portion may be further provided with a second groove, and a second waterproof structure may be disposed in the second groove. The second waterproof structure may be a waterproof film formed integrally, and may be fastened to the second groove in a bonding manner. In addition, the second waterproof structure may be alternatively formed in the second groove by adhesive dispensing. In this way, a waterproof design can be implemented on a side that is of the connector and that is away from the contact region, so as to improve the waterproof performance of the connector.

Because an end that is of the connection terminal and that is away from the contact region may be electrically connected to a circuit board or the like, the end that is of the connection terminal and that is away from the contact region may run through the second waterproof structure and extend to an outside of the limiting portion, to implement an electrical connection between the connection terminal and the circuit board or the like.

In this application, in specific connection terminal disposition, there may be two rows of connection terminals, and the two rows of connection terminals may have a same arrangement direction. The body may include a first surface and a second surface that are disposed opposite to each other, one row of connection terminals are disposed on the first surface, and the other row of connection terminals are disposed on the second surface.

In addition, one ends that are of each row of connection terminals and that are away from the contact region are bent toward a direction away from the other row of connection terminals. In this way, there is a relatively large connection face for a connection between the circuit board and a bending portion formed at the end that is of the connection terminal and that is away from the contact region, so as to improve reliability of the connection between the circuit board and the bending portion. In some other possible implementations of this application, one ends that are of the two rows of connection terminals and that are away from the contact region may be bent toward a same direction, so as to simplify a structure of the connector. It may be understood that, a size of the connector along an extending direction of the connection terminal can be effectively reduced by bending the end that is of the connection terminal and that is away from the contact region, thereby reducing a size of the connector.

In a possible implementation of this application, a maximum size of the connector along an extending direction of the connection terminal is 7.0 mm to 10.5 mm. In addition, a maximum size of the connector along a surface perpendicular to the body is 2.5 mm to 3.5 mm. In this way, the sizes of the connector along the two directions are effectively reduced compared with those of a connector in a conventional technology. Therefore, the connector provided in this application can occupy a smaller space in the housing of the electronic device, and this is conducive to implementation of a miniaturized design of the electronic device.

In a possible implementation of this application, to fasten the connector to the housing of the electronic device, one fastening hole may be further disposed on each of two sides of the limiting portion along an arrangement direction of each row of connection terminals. In this way, a fastener running through the fastening hole may be used to implement a fixed connection between the connector and the housing of the electronic device. In addition, an opening direction of the fastening hole may intersect a surface that is of the body and that is configured to dispose the connection terminal. For example, the opening direction of the fastening hole may be made perpendicular to the surface that is of the body and that is configured to dispose the connection terminal, to help fasten the connector to the housing of the electronic device.

In addition, to avoid shaking when the connector is mounted to the housing of the electronic device, in a possible implementation of this application, an abutting portion may be further disposed on the connector. The abutting portion is a protruding structure disposed in the connecting portion, and the abutting portion and the connection terminal are located on a same side of the body. The abutting portion may abut against the housing to narrow a gap between the connector and the housing, thereby reducing shaking of the connector. In this way, reliability of a connection between the connector and the housing can be improved, and the structure of the connector can be made relatively stable.

According to a second aspect, this application further provides an electronic device. The electronic device includes a housing and the connector in the first aspect. The housing is provided with a connector slot, and the connector slot has a mounting portion located inside the housing. The mounting portion is further provided with a mounting hole, the mounting hole is a through hole, and the mounting hole communicates with the connector slot. When the connector is mounted to the housing, the contact region of the connector is located in the connector slot, so that another connector that is inserted into the connector slot from an outside of the housing can reach contact with a portion that is of the connection terminal and that is located in the contact region. In addition, the connecting portion of the connector is located in the mounting hole, and the first waterproof structure abuts against a hole wall of the mounting hole, so that the first waterproof structure is elastically deformed under extrusion action of the housing, thereby achieving a relatively good waterproof and sealing effect between the connector and the housing of the electronic device.

In addition, in the electronic device provided in this application, a portion of the housing may be used as a shell of the connector to protect the connector, and the connector is not provided with an independent shell structure. In this way, the connector can be enabled to occupy a relatively small space in the electronic device, thereby facilitating a lightening and thinning miniaturized design of the electronic device. In addition, a space may be further reserved for a design of another function module in the electronic device, to implement diversified function designs of the electronic device.

In a possible implementation of this application, the connector further includes an abutting portion, the abutting portion may be a protruding structure disposed in the connecting portion, and the abutting portion abuts against a hole wall of the mounting hole. In this way, a gap between the connector and the hole wall of the mounting hole can be narrowed to reduce shaking of the connector, thereby improving reliability of a connection between the connector and the housing, and making a structure of the connector relatively stable. In addition, the abutting portion and the connection terminal may be located on a same side of the body. This reduces shaking of the connector along a direction perpendicular to the extending direction of the connection terminal, so as to avoid damage to the connection terminal.

To fasten the connector to the housing of the electronic device, in a possible implementation of this application, because the connector is not provided with a shell, the limiting portion may be made to reach direct contact with the mounting portion, and the limiting portion may be fastened to the housing. In addition, in the electronic device, a stopper may be further disposed, the stopper may be disposed on a side that is of the limiting portion and that is away from the mounting portion, and the stopper may press the limiting portion toward the mounting portion to implement a reliable connection between the connector and the housing.

### BRIEF DESCRIPTION OF DRAWINGS

FIG. 1 is a schematic diagram of an application scenario of a connector according to an embodiment of this application;
FIG. 2a is a schematic diagram of a structure of a connector in a conventional technology according to this application;
FIG. 2b is a cross-sectional view of the connector in FIG. 2a;
FIG. 3 is a schematic diagram of a structure of a connector in another conventional technology according to this application;
FIG. 4 is a schematic diagram of a structure of a connector according to an embodiment of this application;
FIG. 5 is a schematic exploded view of a structure of a connector according to an embodiment of this application;
FIG. 6 is a cross-sectional view of the connector shown in FIG. 4 at A-A according to an embodiment of this application;
FIG. 7 is an enlarged view of a local structure at B in FIG. 6;
FIG. 8 is a schematic diagram of a structure of a connector according to another embodiment of this application;
FIG. 9 is a top view of a connector according to an embodiment of this application;
FIG. 10 is a schematic diagram of a structure of an electronic device according to an embodiment of this application;
FIG. 11 is a schematic diagram of a structure of a connector assembled with a housing of an electronic device according to an embodiment of this application;
FIG. 12 is a schematic diagram of a local structure of a connector assembled with a housing of an electronic device according to an embodiment of this application;
FIG. 13 is a schematic diagram of a structure of a connector according to another embodiment of this application;
FIG. 14 is an enlarged view of a local structure at D in FIG. 13;
FIG. 15 is a schematic diagram of a structure of the connector shown in FIG. 13 assembled with a housing of an electronic device;
FIG. 16 is a schematic diagram of a structure of a connector according to another embodiment of this application; and
FIG. 17 is a schematic diagram of a structure of the connector shown in FIG. 16 assembled with a housing of an electronic device.

### Reference numerals:

10-port; 1-connector; 1a-contact region; 101-body; 101a-first surface; 101b-second surface;
102-connection terminal; 1021-solder side; 103-fastening portion; 104-limiting portion; 1041-fastening hole;
1042-second groove; 105-connecting portion; 1051-first groove; 106-first waterproof structure; 107-second waterproof structure;
108-abutting portion; 2-housing; 201-connector slot; 2011-mounting portion; 20111-mounting hole; and
1'-connector; 101'-tongue; 102'-shell; 103'-waterproof structure.

### DESCRIPTION OF EMBODIMENTS

To make the objectives, technical solutions, and advantages of this application clearer, the following further describes this application in detail with reference to accompanying drawings.

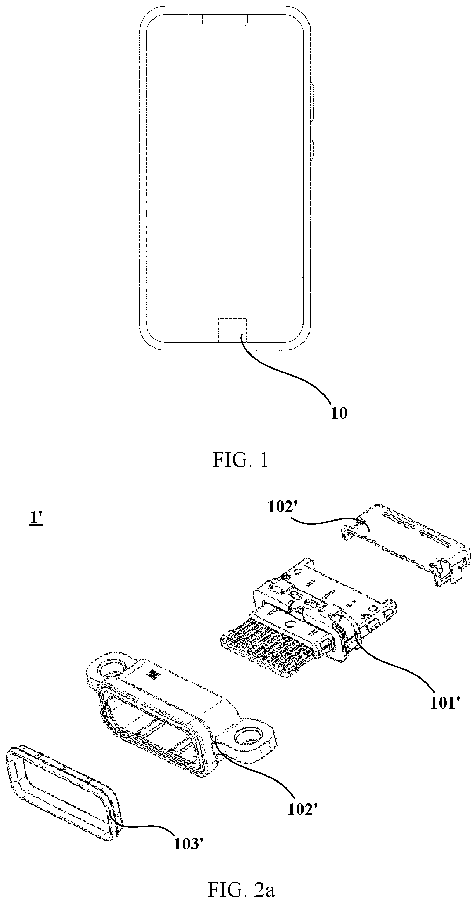

Currently, electronic devices such as a mobile phone, a notebook computer, a desktop computer, a tablet computer, and a headset or a smart watch and a smart band are all provided with an port for charging and data transmission. For example, the port may be, but is not limited to, a Type-C port, a Type-A port, a USB port, or the like. Refer to FIG. 1. A mobile phone is used as an example. Usually, an port 10 may be disposed in an end portion of the mobile phone, and may often be disposed at one end that is of the mobile phone and that is away from a camera, so that the mobile phone can be relatively conveniently used in a process of performing charging or data transmission for the mobile phone by using the port 10.

It may be understood that, to implement an electrical connection between the port 10 of the electronic device and another connection device, a connector 1' of a corresponding type may be usually disposed in the port 10 of the electronic device. FIG. 2a is a schematic diagram of a structure of a connector 1' in a conventional technology according to this application. The existing connector 1' usually includes a tongue 101' and a shell 102' enclosing an outer side of the tongue 101'. A material of the shell 102' may be plastic, metal, or the like. In addition, to implement waterproofing on the connector 1', the connector 1' usually further includes a waterproof structure 103'. For example, the waterproof structure 103' may be a waterproof ring, or may be implemented by silica gel injection molding on the connector 1'.

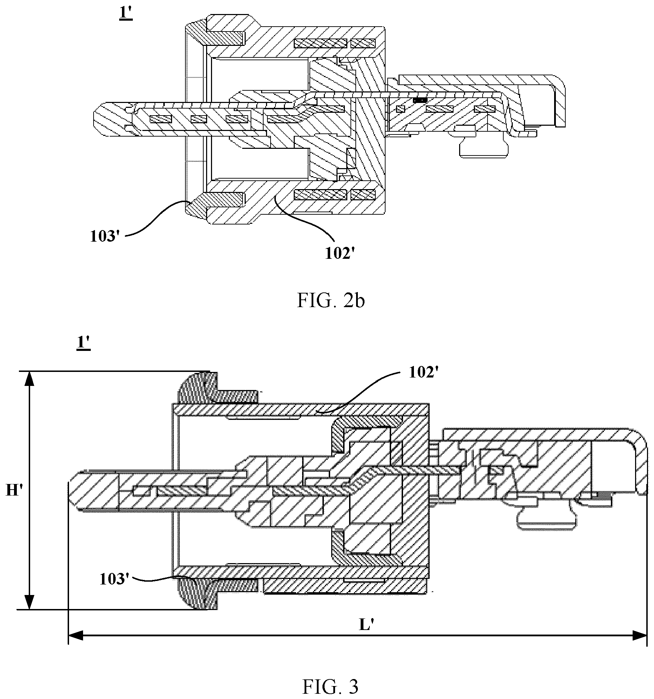

FIG. 2b shows a cross-sectional view of the connector 1' in FIG. 2a. In this embodiment, the waterproof structure 103' may be disposed in an end portion of the connector 1'. Specifically, when the connector 1' is disposed in the port 10 of the electronic device, the waterproof structure 103' is close to an opening of the port 10, thereby providing an effective waterproof and dust-proof effect. In addition, FIG. 3 is a schematic diagram of a structure of a connector 1' in another conventional technology according to this application. In this embodiment, a waterproof structure 103' is disposed around an outer side of a shell 102', and the waterproof structure 103' towers over the outer side of the shell 102' by a specific distance. In this way, when the connector 1' is mounted in the electronic device, the waterproof structure 103' can be enabled to provide a waterproof and dust-proof function between the connector 1' and the electronic device.

As electronic devices develop and gradually become mature, a lightening and thinning design has become a maj or development trend for the electronic devices to meet user requirements. From the foregoing description of some existing connectors, it may be learned that, the connector 1' usually includes the shell 102', and when a waterproof design is implemented on the connector 1', the waterproof structure 103' is usually disposed on a surface of the shell 102'. This causes a relatively large size of the entire connector 1'. If the foregoing connector 1' is further used in an electronic device, a miniaturized design for an overall size of the electronic device is made more difficult.

A connector provided in this application is intended to resolve the foregoing problem. A size of the connector is relatively small. When the connector is used in an electronic device, the connector occupies a relatively small space in the electronic device, thereby facilitating a lightening and thinning miniaturized design of the electronic device. To understand the connector provided in embodiments of this application, the following describes in detail a specific disposition manner of the connector with reference to accompanying drawings.

The terms used in the following embodiments are merely used for an objective of describing a specific embodiment, and are not intended to limit this application. As used in this specification and the appended claims of this application, "one", "a", "the", "said", and "this" of singular expression forms are also intended to include an expression form such as "one or more", unless expressly indicated otherwise in their context. It should be further understood that, in the following embodiments of this application, "at least one" and "one or more" mean one, two, or more. The term "and/or" describes an association relationship between associated objects, and indicates that three types of relationships may exist. For example, "A and/or B" may represent the following three cases: Only A exists, both A and B exist, and only B exists. A and B may be singular or plural. The character "/" generally represents an "or" relationship between the associated objects.

In the description of this specification, reference to "one embodiment", "some embodiments", or the like means that one or more embodiments of this application include particular features, structures, or characteristics described with reference to the embodiments. Therefore, the statements "in an embodiment", "in some embodiments", "in some other embodiments", "in some additional embodiments", and the like that appear in different parts of this specification do not necessarily reference a same embodiment, but mean "one or more (but not all) of the embodiments", unless otherwise specifically emphasized. The terms "include", "comprise", "have", and their variants all mean "including but not limited to", unless otherwise specifically emphasized.

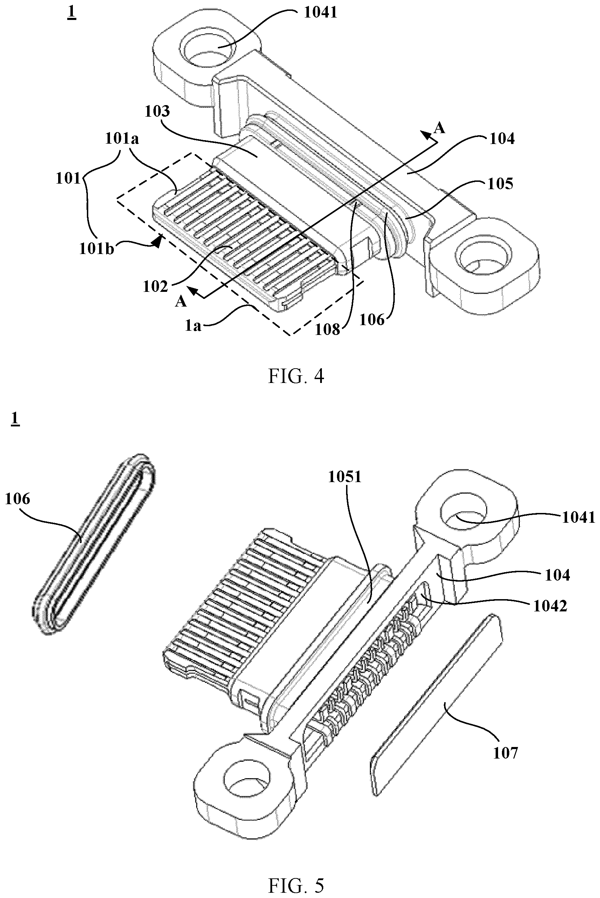

FIG. 4 shows a connector 1 according to a possible embodiment of this application. The connector 1 includes a body 101 and a connection terminal 102. The body 101 may be, but is not limited to being, formed by injection molding. For example, a material of the body 101 may be plastic, ceramic, or the like. The connection terminal 102 may be configured to reach contact with a connection terminal of another connector 1, so as to implement signal transmission between the two connectors. A material of the connection terminal 102 may be a conductive metal, for example, may be copper or the like. In addition, the connection terminal 102 may be embedded into the body 101, so that the body 101 fastens and limits the connection terminal 102, thereby improving structural stability of the connection terminal 102.

Still refer to FIG. 4. Usually, the connector 1 may include two rows of connection terminals 102, and the two rows of connection terminals 102 may have a same arrangement direction. In addition, in the two rows of connection terminals 102, one row of connection terminals 102 are disposed on a first surface 101a of the body 101, and the other row of connection terminals 102 are disposed on a second surface 101b of the body 101. The first surface 101a and the second surface 101b are disposed opposite to each other. Each row of connection terminals 102 may include at least two connection terminals 102, and the at least two connection terminals 102 are spaced side by side, so as to avoid a short circuit between two adjacent connection terminals 102. In addition, the at least two connection terminals 102 may be, but are not limited to, signal terminals, power terminals, ground terminals, or the like. Cross-sectional areas of all the connection terminals 102 may be the same or different, and may be adjusted according to requirements of signals transmitted by the connection terminals 102. It may be understood that cross-sectional areas at various positions of each connection terminal 102 may be the same or different, and may be specifically adjusted based on an actual application scenario.

In a possible embodiment of this application, quantities of the two rows of connection terminals 102 may be the same. In this way, the two rows of connection terminals 102 may be disposed in a one-to-one correspondence, so as to effectively reduce a length of the connector 1 along an arrangement direction of each row of connection terminals 102. In addition, two correspondingly disposed connection terminals 102 may have a same length, and may also have a same cross-sectional shape and area, so as to transmit same signals. In addition, alternatively, the two rows of connection terminals 102 may be staggered to reduce mutual impact between the connection terminals 102 on signal transmission.

In some other embodiments of this application, alternatively, quantities of the two rows of connection terminals 102 may be different, and may be designed according to a specific signal transmission requirement. It may be understood that, when the quantities of the two rows of connection terminals 102 are different, an arrangement manner of the two rows of connection terminals 102 is similar to an arrangement manner in a case that the two rows of connection terminals 102 have a same quantity. Details are not described herein again.

In this application, to improve structural stability of the connector 1, a steel plate (not shown in FIG. 4) may be further disposed between the two rows of connection terminals 102. A material of the steel plate may be, but is not limited to, a metal with a relatively high hardness, such as steel or the like, so as to provide reliable support for the entire connector 1.

Still refer to FIG. 4. In this application, to implement an electrical connection between the connector 1 and another connector, the connector 1 may be enabled to include a contact region 1a. In this way, portions that are of each row of connection terminals 102 and that are located in the contact region 1a may be exposed from a corresponding surface of the body 101 of the connector 1, so that the connection terminals 102 reach contact with another connector.

As shown in FIG. 4, in addition to the foregoing structures, the connector 1 provided in this application may further include a fastening portion 103. The fastening portion 103 may be disposed around the body 101, and enclose the connection terminal 102 to protect the connection terminal 102. In a possible embodiment of this application, a material of the fastening portion 103 may be, but is not limited to, plastic, ceramic, or another an insulating material, so as to avoid a short circuit between the connection terminals 102. In some other embodiments, alternatively, a material of the fastening portion 103 may be metal or another non-insulating material. In this case, an insulation layer may be disposed on a surface of the fastening portion 103 to reduce a risk of a short circuit of the connection terminal 102.

In a possible embodiment of this application, the material of the fastening portion 103 is plastic. In this case, the fastening portion 103 may be formed by using an injection molding technology, so that a processing technology of the fastening portion 103 can be effectively simplified. In addition, the fastening portion 103 may be made into an integrally formed structure. In this way, in addition to effectively improving the structural stability of the connector 1, the fastening portion 103 can further implement a waterproof effect on the connector 1.

From the description of the body 101 of the connector 1 in the foregoing embodiments, it may be learned that the body 101 may be alternatively formed by plastic injection molding in this application. Therefore, in an embodiment of this application, the body 101 and the fastening portion 103 may be alternatively an integrally formed structure to simplify a processing technology of the connector 1.

Still refer to FIG. 4. The connector 1 provided in this application may further include a limiting portion 104, and the limiting portion 104 is disposed on a side that is of the fastening portion 103 and that is away from the contact region 1a. In addition, the limiting portion 104 may be disposed around the body 101 and enclose the connection terminal 102 to protect the connection terminal 102. It may be seen from FIG. 4 that in this application, a cross-sectional area of the limiting portion 104 may be greater than or equal to a cross-sectional area of the fastening portion 103. In this way, when the connector 1 is mounted on the electronic device, a mounting position of the connector 1 on the electronic device can be limited over contact between the limiting portion 104 and a housing of the electronic device.

In this application, a material of the limiting portion 104 is not specifically limited. For example, the material may be plastic, ceramic, or another insulating material, or may be metal or another non-insulating material. In a possible embodiment of this application, the materials of the limiting portion 104 and the fastening portion 103 are the same, and both are plastic, ceramic, or another insulating material. Still refer to FIG. 4. The limiting portion 104 and the fastening portion 103 may be made into an integrally formed plastic structure, ceramic structure, or the like, so as to simplify a processing process of the limiting portion 104 and the fastening portion 103, improve a waterproof effect of the connector 1, reduce a weight of the connector 1, and improve an integration degree of the connector 1, thereby improving structural reliability of the connector 1.

In addition, one fastening hole 1041 is disposed on each of two sides of the limiting portion 104 along the arrangement direction of each row of connection terminals 102, and an opening direction of the fastening hole 1041 intersects a surface that is of the body 101 and that is configured to dispose the connection terminal 102. In a possible embodiment, the opening direction of the fastening hole 1041 may be made perpendicular to the surface that is of the body 101 and that is configured to dispose the connection terminal 102. In this way, a fastener running through the fastening hole 1041 may be disposed to implement a fixed connection between the connector 1 and the housing of the electronic device.

Still refer to FIG. 4. In some embodiments of this application, the connector 1 further includes a connecting portion 105 disposed between the fastening portion 103 and the limiting portion 104. The connecting portion 105 may also be disposed around the body 101. A material of the connecting portion 105 may be, but is not limited to, plastic, ceramic, or another insulating material, or may be metal or another non-insulating material. When the materials of the fastening portion 103, the connecting portion 105, and the limiting portion 104 are the same, for example, all are plastic or ceramic, the three portions may be an integrally formed structure design, so as to simplify a processing process of the connector 1 and improve an integration degree of the connector 1, thereby improving structural reliability of the connector 1.

In addition, FIG. 5 is a schematic exploded view of a structure of the connector 1 shown in FIG. 4. Refer to both FIG. 4 and FIG. 5. In this application, the connecting portion 105 is provided with a first groove 1051, and the first groove 1051 is a closed annular groove disposed around the body 101. In addition, a first waterproof structure 106 is disposed in the first groove 1051. A material of the first waterproof structure 106 may be, but is not limited to, silica gel, rubber, or another material that can be elastically deformed. The first waterproof structure 106 may be formed in the first groove 1051 by using, but not limited to, an adhesive dispensing manner.

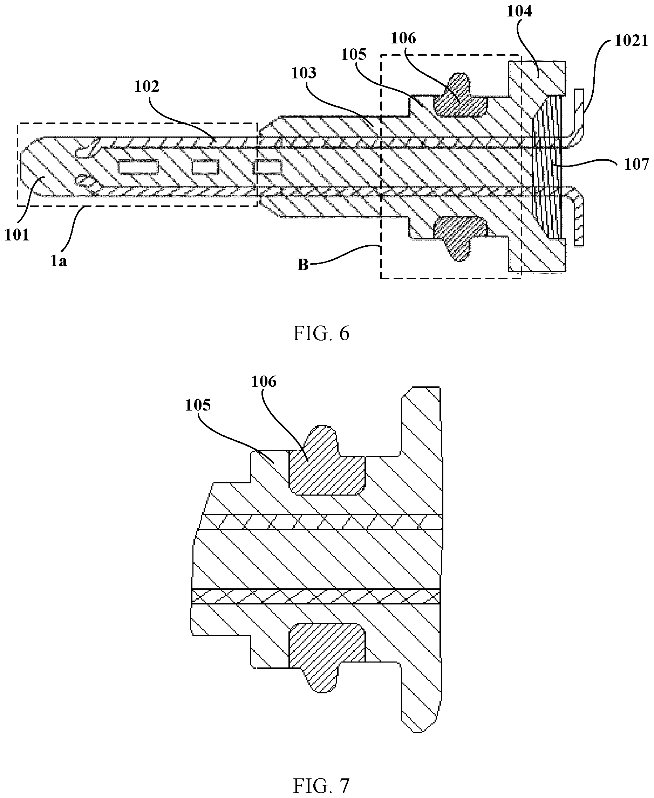

FIG. 6 is a cross-sectional view of the connector 1 shown in FIG. 4 at A-A according to an embodiment of this application. In addition, FIG. 7 is an enlarged view of a local structure at B in FIG. 6. In this embodiment, a portion of the first waterproof structure 106 may extend to an outside of the first groove 1051 to form a protrusion that towers over a surface of the connecting portion 105.

Still refer to FIG. 5 and FIG. 6. In this embodiment of this application, the first waterproof structure 106 is a closed annular structure disposed around the body 101, and protrusions formed at various positions of the first waterproof structure 106 may tower over the surface of the connecting portion 105 by a same height or different heights. Still refer to FIG. 6. In some embodiments of this application, surfaces of the fastening portion 103, the connecting portion 105, and the limiting portion 104 may be arranged in a stepped shape.

Still refer to FIG. 5 and FIG. 6. In this embodiment of this application, one end that is of the connection terminal 102 and that is away from the contact region 1a may extend out from one end that is of the limiting portion 104 and that is away from the fastening portion 103. In addition, one end that is of the limiting portion 104 and that is away from the fastening portion 103 is provided with a second groove 1042, and the end that is of the connection terminal 102 and that is away from the contact region 1a extends to the second groove 1042. A second waterproof structure 107 is disposed in the second groove 1042. The second waterproof structure 107 may be a waterproof layer with an integral structure shown in FIG. 5, and may be fastened to the second groove 1042 in a bonding manner. In some other possible embodiments of this application, the second waterproof structure 107 may be alternatively formed in the second groove 1042 in an adhesive dispensing manner, and a material of the second waterproof structure 107 may be, but is not limited to, silicon gel or the like. By disposing the second waterproof structure 107, waterproofing on the connector 1 can be implemented to improve operating reliability of the connector 1.

Still refer to FIG. 6. One end that is of the connection terminal 102 and that is away from the contact region 1a runs through the second waterproof structure 107 and extends to an outside of the limiting portion 104. In addition, in this embodiment, one ends that are of the two rows of connection terminals 102 and that are away from the contact region 1a are bent toward opposite directions. One ends that are of each row of connection terminals 102 and that are away from the contact region 1a may be bent toward a direction away from the other row of connection terminals 102. This can effectively reduce a length of the connector 1 along an extending direction of the connection terminal 102.

It may be understood that, in the embodiment shown in FIG. 6, end faces of bending portions formed by bending the one ends that are of the two rows of connection terminals 102 and that are away from the contact region 1a toward opposite directions may be used as solder sides 1021. The solder side 1021 may intersect a surface of the body 101. In a possible embodiment, the solder side 1021 may be perpendicular to the surface of the body 101. In addition, in this embodiment, the solder side 1021 may be configured to connect a circuit board. This enables a relatively large contact face for contact between the connection terminal 102 and the circuit board, thereby improving reliability of a connection between the connection terminal 102 and the circuit board.

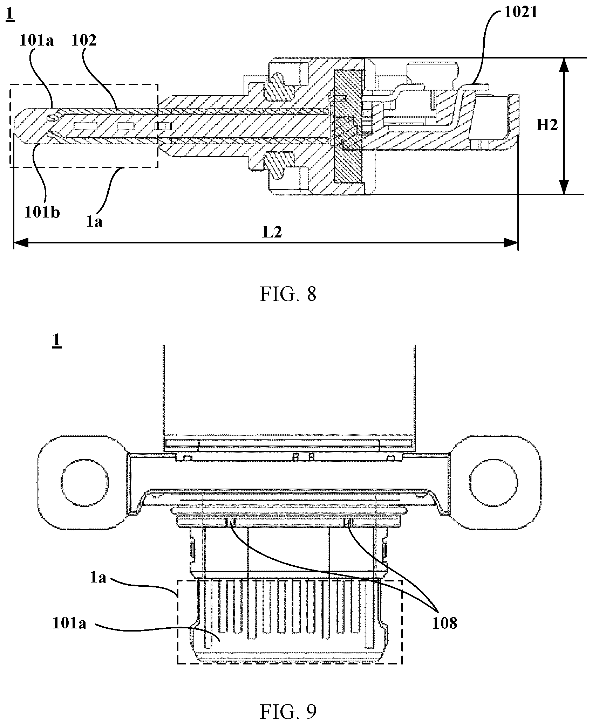

In addition to the foregoing bending manner, another possible manner may be used in an end portion that is of the connector 1 and that is away from the contact region 1a. For example, FIG. 8 shows a bending manner of an end portion that is of the connection terminal 102 and that is away from the contact region 1a according to another possible embodiment of this application. In the embodiment shown in FIG. 8, end portions that are of the two rows of connection terminals 102 and that are away from the contact region 1a have a same bending direction, and are all bent toward one side of the first surface 101a of the body. The bending portions of the two rows of connection terminals 102 are disposed in two rows along a direction away from the contact region 1a. In addition, end faces of the bending portions may be used as solder sides 1021, and the solder sides 1021 may be parallel to the first surface 101a. The end faces of the two rows of bending portions may be located on a same plane to implement a connection between the two rows of connection terminals 102 and the circuit board.

It may be understood that, in another embodiment of this application, based on the structure of the connector 1 shown in FIG. 8, end portions that are of the two rows of connection terminals 102 and that are away from the contact region 1a may all be bent toward one side of the second surface 101b of the body. In this embodiment, for a specific disposition manner of the bending portion, refer to the foregoing description of the embodiment shown in FIG. 8. Details are not described herein again.

FIG. 9 is a top view of a connector 1 according to an embodiment of this application. It may be learned from FIG. 9 that, in this embodiment, the connector 1 is further provided with an abutting portion 108, the abutting portion 108 may be disposed in the connecting portion 105, and the abutting portion 108 and the connection terminal 102 may be located on a same side of the body 101. For example, the abutting portion 108 may be disposed on a side that is of the connecting portion 105 and that is located on the first surface 101a of the body 101. In this application, a material of the abutting portion 108 is not limited, and may be, for example, plastic, ceramic, or the like. In addition, a manner of fastening the abutting portion 108 to the connecting portion 105 is not limited in this application. For example, when the material of the abutting portion 108 is the same as the material of the connecting portion 105, the abutting portion 108 and the connecting portion 105 may be an integrally formed structure. In some possible embodiments, alternatively, the abutting portion 108 may be an independently disposed structure, and may be fastened to the connecting portion 105 by using, but not limited to, a bonding manner or the like.

In this application, the abutting portion 108 may be a spot-like or strip-like protruding structure, and may be disposed on a side that is of the first waterproof structure 106 and that faces the contact region 1a. In addition, there may be a plurality of abutting portions 108, and the plurality of abutting portions 108 may be disposed on a same side of the first waterproof structure 106. Alternatively, the plurality of abutting portions 108 are separately disposed on two sides of the first waterproof structure 106 along the extending direction of the connection terminal 102.

Other than being disposed on the side that is of the connecting portion 105 and that is located on the first surface 101a of the body 101, the abutting portions 108 may be disposed on a side that is of the connecting portion 105 and that is located the second surface 101b of the body 101; or the abutting portions 108 may be disposed on both sides of the connecting portion 105. For a specific disposition manner of the abutting portions 108, refer to the foregoing embodiments. Details are not described herein again.

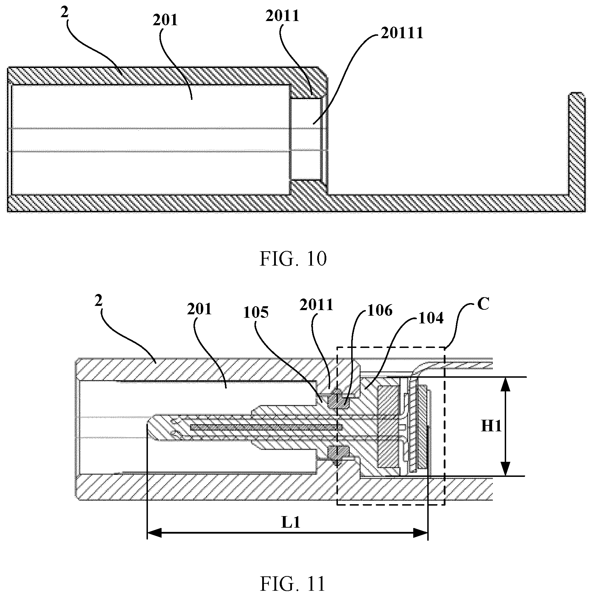

It may be learned from the description of the foregoing embodiments that the connector 1 provided in this application may be disposed in an electronic device to be used for charging, data transmission, and the like of the electronic device. When the connector 1 is specifically disposed in the electronic device, refer to FIG. 10 first. FIG. 10 is a schematic diagram of a structure of an electronic device according to an embodiment of this application. For ease of describing an assembly relationship between the connector 1 and the electronic device, FIG. 10 shows only a partial structure of a housing 2 of the electronic device. The housing 2 of the electronic device includes a connector slot 201. The connector slot 201 may be used as an port of the electronic device. The connector slot 201 may accommodate a portion that is of the connection terminal 102 of the connector 1 according to any one of the foregoing embodiments and that is located in the contact region 1a. Another connector may be inserted into the connector slot 201 and be electrically connected to the connection terminal 102, so as to implement signal transmission between the two connectors.

In addition, the connector slot 201 has a mounting portion 2011 located inside the housing 2. The mounting portion 2011 is provided with a mounting hole 20111, the mounting hole 20111 is a through hole, and the mounting hole 20111 communicates with the connector slot 201.

FIG. 11 is a schematic diagram of a structure of a connector 1 assembled with a housing 2 of an electronic device according to an embodiment of this application. It may be learned from FIG. 11 that when the connector 1 is mounted in the housing 2, the connector 1 may extend into the connector slot 201 by passing through the mounting hole 20111 inside the housing 2. The contact region 1a of the connector 1 is located in the connector slot 201, and the connecting portion 105 is located in the mounting hole 20111. In addition, the limiting portion 104 is located on a side that is of the mounting hole 20111 and that is away from the connector slot 201. Because the connector 1 provided in this application is not provided with a shell, the limiting portion 104 may reach direct contact with the mounting portion 2011 to limit a length by which the connector 1 extends into the connector slot 201, so as to insert the connector 1 in place.

From the description of the disposition manner of the specific structure of the connecting portion 105 in the connector 1 in the foregoing embodiments, it may be learned that, the connecting portion 105 is provided with the first waterproof structure 106, and the first waterproof structure 106 has a portion that towers over a surface of the connecting portion 105. Still refer to FIG. 11. After the connector 1 is mounted to the housing 2 of the electronic device, because the connecting portion 105 is located in the mounting hole 20111, the first waterproof structure 106 may abut against a hole wall of the mounting hole 20111. In addition, the first waterproof structure 106 may be formed from a material that can be elastically deformed. Therefore, by properly designing a height of the portion that is of the first waterproof structure 106 and that towers over the surface of the connecting portion 105, the first waterproof structure 106 can be elastically deformed under extrusion action of the connecting portion 105 and the hole wall of the mounting hole 20111, thereby achieving a reliable waterproof and sealing effect between the connecting portion 105 and the hole wall of the mounting hole 20111.

In addition, because the connecting portion 105 of the connector 1 may be provided with the abutting portion 108 shown in FIG. 9, when the connector 1 is mounted to the housing 2, the abutting portion 108 may abut against a hole wall of the mounting hole 20111 of the mounting portion 2011, so as to narrow a mounting gap between the connector 1 and the mounting hole 20111 and reduce shaking of the connector 1, thereby improving reliability of a connection between the connector 1 and the housing 2.

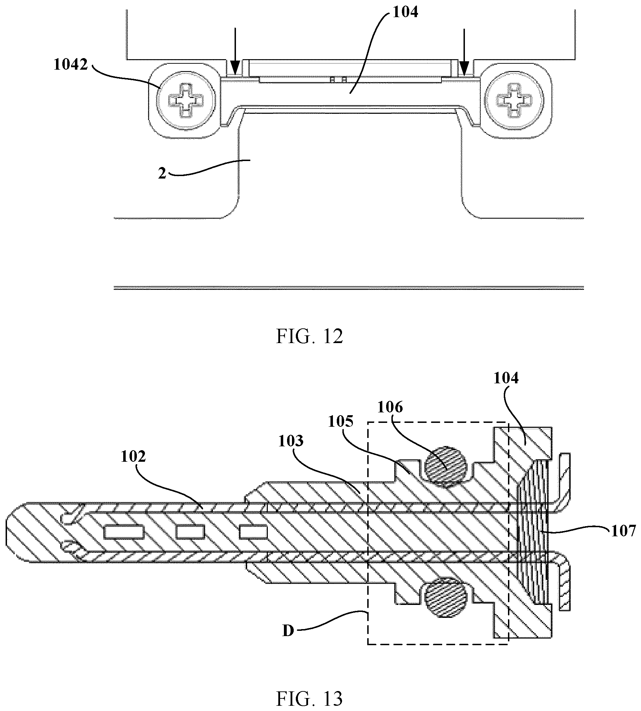

In this application, after the connector 1 is assembled with the housing 2 of the electronic device, the connector 1 may usually be fastened to the housing 2, to prevent the connector 1 from falling off from the housing 2. In specific implementation, refer to FIG. 12. FIG. 12 is a schematic diagram of a local structure of a connector 1 assembled with a housing 2 of an electronic device according to a possible embodiment of this application. FIG. 12 corresponds to a local structure at C in FIG. 11. In this embodiment, the connector 1 may be securely locked to the housing 2 of the electronic device by using the fasteners running through the fastening holes 1041 on both sides of the connector 1, so as to implement a fixed connection between the connector 1 and the housing 2 of the electronic device.

In addition, still refer to FIG. 12. In this application, the electronic device may further include a stopper (not shown in FIG. 12). The stopper is disposed on a side that is of the limiting portion 104 of the connector 1 and that is away from the mounting portion 2011. The stopper may exert an acting force on the limiting portion 104 along a direction toward the mounting portion 2011 (a direction indicated by an arrow in FIG. 12), so as to press the limiting portion 104 toward the mounting portion 2011, thereby implementing a reliable connection between the connector 1 and the housing 2.

By using the connector 1 provided in this application, as the connector 1 is not provided with a shell or the like, a volume of the connector 1 can be effectively reduced. In this application, a length of the connector 1 means a maximum size of the connector 1 along the extending direction of the connection terminal, and a height of the connector 1 means a maximum size of the connector 1 along a surface perpendicular to the body. In this application, the length of the connector 1 may reach 7.0 mm to 10.5 mm. In addition, the height of the connector 1 may reach 2.5 mm to 3.5 mm. For example, as shown in FIG. 11, a length L1 of the connector 1 provided in this application may be 7.59 mm, which is 2.21 mm shorter than a length L' (9.8 mm) of the connector 1 in the conventional technology shown in FIG. 3. In addition, a height H1 of the connector 1 provided in FIG. 11 of this application may be 3.0 mm, which is 1.36 mm shorter than a height H' (4.36 mm) of the connector 1 in the conventional technology shown in FIG. 3. For another example, a length L2 of the connector 1 shown in FIG. 8 may be 9.8 mm, which is equal to the length L' (9.8 mm) of the connector 1 in the conventional technology shown in FIG. 3. In addition, a height H2 of the connector 1 provided in FIG. 8 of this application may be 3.0 mm, which is 1.36 mm shorter than the length H' (4.36 mm) of the connector 1 in the conventional technology shown in FIG. 3. Therefore, when the connector 1 is used in the electronic device, the connector 1 can be enabled to occupy a relatively small space in the housing 2 of the electronic device, thereby facilitating a miniaturized design of the electronic device. In addition, because the connector 1 occupies a relatively small space, the connector 1 can reserve a space for disposing more function modules in the electronic device, so as to help implement diversified function designs of the electronic device, thereby meeting more use requirements of consumers and expanding an applicable scope of the electronic device.

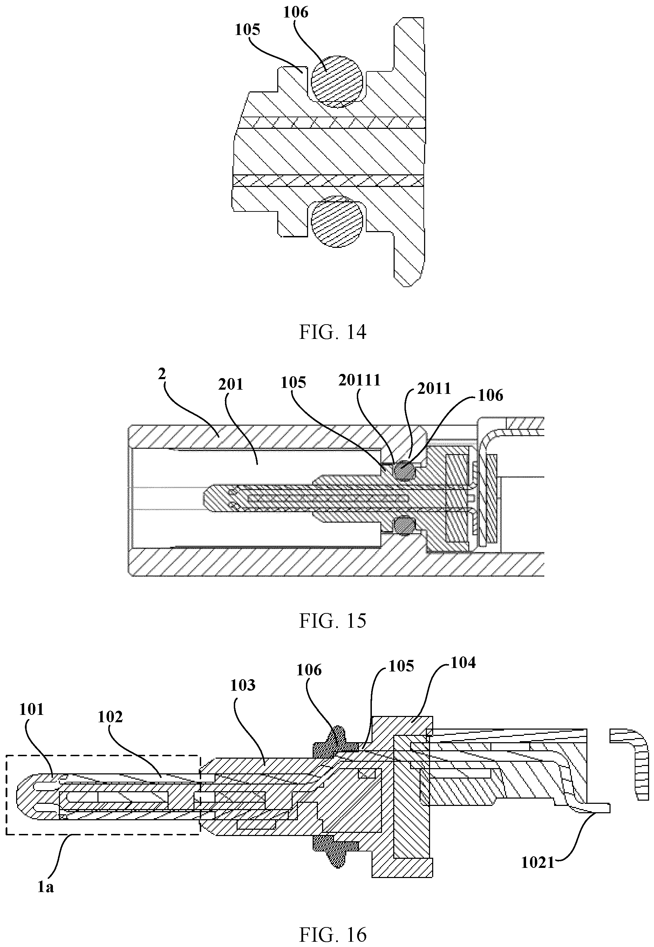

In this application, in addition to the implementation, described in the foregoing embodiment, in which the first waterproof structure 106 may be formed in the first groove 1051 of the connecting portion 105 in the adhesive dispensing manner, the first waterproof structure 106 may be alternatively an independent structure. For example, the first waterproof structure 106 is a waterproof ring that can be elastically deformed, and a material of the waterproof ring may be, but is not limited to, rubber. FIG. 13 is a schematic diagram of a structure of a connector 1 according to another possible embodiment of this application. In this embodiment, the first waterproof structure 106 is a waterproof ring, and a cross-sectional shape of the waterproof ring may be, but is not limited to, a circle, a rectangle, a triangle, or another regular shape, or may be another possible irregular shape. In addition, FIG. 14 is an enlarged view of a local structure at D in FIG. 13. In this embodiment, the first waterproof structure 106 also has a portion that towers over a surface of the connecting portion 105.

For another structure of the connector 1 in the embodiment shown in FIG. 13, refer to the foregoing embodiments to perform disposition. Details are not described herein again. In addition, FIG. 15 is a schematic diagram of a structure of the connector 1 shown in FIG. 13 assembled with a housing of an electronic device. When the connector 1 shown in FIG. 13 is mounted in the electronic device, the first waterproof structure 106 of the connector 1 abuts against the hole wall of the mounting hole 20111 of the mounting portion 2011 of the connector slot 201, so as to achieve a reliable waterproof and sealing effect between the connecting portion 105 and the hole wall of the mounting hole 20111. In addition, for a position relationship and a manner of connection between the connector 1 and the housing 2 of the electronic device, refer to the foregoing embodiments. Details are not described herein again.

FIG. 16 is a schematic diagram of a structure of a connector 1 according to another possible embodiment of this application. In this embodiment, the first waterproof structure 106 may be formed on a step surface between the fastening portion 103 and the connecting portion 105. To be specific, a portion of the first waterproof structure 106 is located on a surface of the fastening portion 103, and another portion of the first waterproof structure 106 is located on a surface of the connecting portion 105. In addition, as in the foregoing embodiments, the first waterproof structure 106 also has a portion that towers over the surface of the connecting portion 105.

Still refer to FIG. 16. In this embodiment, end portions that are of the two rows of connection terminals 102 and that are away from the contact region 1a may have a same bending direction. In addition, in the embodiment shown in FIG. 16, bending portions formed by bending the end portions that are of the two rows of connection terminals 102 of the connector 1 and that are away from the contact region 1a are disposed side by side. In addition, end faces of the bending portions of the connection terminals 102 may also be used as solder sides 1021. The solder sides 1021 may be parallel to a surface of the body 101, and this can effective increase a contact area between the connection terminals and the circuit board, so as to help implement soldering between the connection terminals and the circuit board.

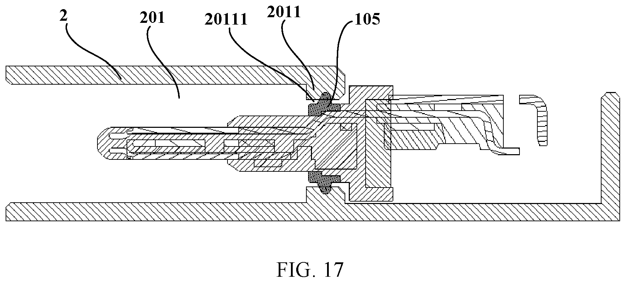

It may be understood that, for another structure of the connector 1 in the embodiment shown in FIG. 16, refer to the foregoing embodiments to perform disposition. Details are not described herein again. In addition, FIG. 17 is a schematic diagram of a structure of the connector 1 shown in FIG. 16 assembled with a housing of an electronic device. When the connector 1 shown in FIG. 16 is mounted in the electronic device, for a position relationship and a connection relationship between the connector 1 and the housing 2 of the electronic device, refer to the foregoing embodiments. Details are not described herein again.

By using the connector 1 provided in this application, as the connector 1 is not provided with a shell or the like, a volume of the connector 1 can be effectively reduced. Therefore, when the connector 1 is used in the electronic device, the connector 1 can be enabled to occupy a relatively small space in the housing 2 of the electronic device, thereby facilitating a miniaturized design of the electronic device. In addition, because the connector 1 occupies a relatively small space, the electronic device can be further provided with more function modules, so as to help implement diversified function designs of the electronic device, thereby meeting more use requirements of consumers and expanding an applicable scope of the electronic device.

The foregoing descriptions are merely specific implementations of this application, and are not intended to limit the protection scope of this application. The modifications or replacements readily figured out by a person skilled in the art within the technical scope disclosed in this application shall all fall within the protection scope of this application. Therefore, the protection scope of this application shall be subject to the protection scope of the claims.

## Claims

1. A connector, comprising a body (101), a connection terminal (102), a fastening portion (103), a limiting portion (104), and a connecting portion (105), wherein
the connection terminal (102) is embedded into the body (101), the connector has a contact region (1a), and a portion that is of the connection terminal (102) and that is located in the contact region (1a) is exposed from a surface of the body (101);
the fastening portion (103) is disposed around the body (101) and encloses the connection terminal (102);
the limiting portion (104) is disposed on a side that is of the fastening portion (103) and that is away from the contact region (1a), the limiting portion (104) is disposed around the body (101), and the limiting portion (104) encloses the connection terminal (102); and
the connecting portion (105) is disposed between the fastening portion (103) and the limiting portion (104), the connecting portion (105) is disposed around the body (101), the connecting portion (105) is provided with a first waterproof structure (106), and a portion of the first waterproof structure (106) towers over a surface of the connecting portion (105).

2. The connector according to claim 1, wherein the connecting portion (105) is provided with a first groove (1051), and the first groove (1051) is an annular groove disposed around the body (101); and the first waterproof structure (106) is disposed in the first groove (1051).

3. The connector according to claim 1, wherein a portion of the first waterproof structure (106) is located on a surface of the connecting portion (105), and another portion of the first waterproof structure (106) is located on a surface of the fastening portion (103).

4. The connector according to any one of claims 1 to 3, wherein the first waterproof structure (106) is formed by adhesive dispensing; or the first waterproof structure (106) is an independently disposed waterproof ring.

5. The connector according to any one of claims 1 to 4, wherein one end that is of the limiting portion (104) and that is away from the fastening portion (103) is provided with a second groove (1042), and a second waterproof structure (107) is disposed in the second groove (1042).

6. The connector according to claim 5, wherein one end that is of the connection terminal (102) and that is away from the contact region (1a) runs through the second waterproof structure (107) and extends to an outside of the limiting portion (104).

7. The connector according to any one of claims 1 to 6, wherein there are two rows of connection terminals (102), and the two rows of connection terminals (102) have a same arrangement direction; and the body (101) comprises a first surface and a second surface that are disposed opposite to each other, one row of connection terminals (102) are disposed on the first surface, and the other row of connection terminals (102) are disposed on the second surface.

8. The connector according to claim 7, wherein one ends that are of each row of connection terminals (102) and that are away from the contact region (1a) are bent toward a direction away from the other row of connection terminals (102); or one ends that are of the two rows of connection terminals (102) and that are away from the contact region (1a) are bent toward a same direction.

9. The connector according to claim 7 or 8, wherein one fastening hole (1041) is disposed on each of two sides of the limiting portion (104) along an arrangement direction of each row of connection terminals (102), and an opening direction of the fastening hole (1041) intersects a surface that is of the body (101) and that is configured to dispose the connection terminal (102).

10. The connector according to any one of claims 1 to 9, wherein the connector further comprises an abutting portion (108), the abutting portion (108) is a protruding structure disposed in the connecting portion, and the abutting portion (108) and the connection terminal (102) are located on a same side of the body (101).

11. The connector according to any one of claims 1 to 10, wherein a maximum size of the connector along an extending direction of the connection terminal (102) is 7.0 mm to 10.5 mm; and/or a maximum size of the connector along a direction perpendicular to a surface of the body (101) is 2.5 mm to 3.5 mm.

12. An electronic device, comprising a housing (2) and the connector according to any one of claims 1 to 11, wherein
the housing (2) comprises a connector slot (201), the connector slot (201) has a mounting portion (2011) located inside the housing (2), the mounting portion (2011) is provided with a mounting hole (20111), the mounting hole (20111) is a through hole, and the mounting hole (20111) communicates with the connector slot (201); and
the contact region (1a) of the connector is located in the connector slot (201), the connecting portion (105) is located in the mounting hole (20111), and the first waterproof structure (106) abuts against a hole wall of the mounting hole (20111).

13. The electronic device according to claim 12, wherein the connector further comprises an abutting portion (108), the abutting portion (108) is a protruding structure disposed in the connecting portion, and the abutting portion (108) abuts against a hole wall of the mounting hole (20111).

14. The electronic device according to claim 13, wherein the abutting portion (108) and the connection terminal (102) are located on a same side of the body (101).

15. The electronic device according to any one of claims 12 to 14, wherein the connector is not provided with a shell, the limiting portion (104) reaches direct contact with the mounting portion (2011), and the limiting portion (104) is fastened to the housing (2).

16. The electronic device according to claim 15, wherein the electronic device further comprises a stopper, the stopper is disposed on a side that is of the limiting portion and that is away from the mounting portion, and the stopper presses the limiting portion (104) toward the mounting portion (2011).
